# EUROPEAN PATENT SPECIFICATION

(11) **EP 4 242 109 B1**
(45) Date of publication and mention of the grant of the patent: **29.04.2026**
(21) Application number: 23160190.7
(22) Date of filing: 06.03.2023
(51) Int. Cl.: B64D 25/14, G01L 1/04, G01L 1/22, G01L 1/14

(54) **STRETCH SENSOR ASSEMBLY AND METHOD OF ASSEMBLING STRETCH SENSOR ASSEMBLIES FOR EVACUATION SYSTEM INFLATABLES**
DEHNUNGSSENSORANORDNUNG UND VERFAHREN ZUR MONTAGE VON DEHNUNGSSENSORANORDNUNGEN FÜR AUFBLASBARE EVAKUIERUNGSSYSTEME
ENSEMBLE CAPTEUR D'ÉTIREMENT ET PROCÉDÉ D'ASSEMBLAGE D'ENSEMBLES CAPTEURS D'ÉTIREMENT POUR DES ARTICLES GONFLABLES DE SYSTÈME D'ÉVACUATION

(30) Priority: 08.03.2022 IN 202241012531; 05.05.2022 US 202217737767
(43) Date of publication of application: 13.09.2023
(73) Proprietor: Goodrich Corporation, Charlotte, NC 28217-4578 (US)
(72) Inventor: JOHN, Poly Puthur, Bangalore (IN); AGARWAL, Ashish Kumar, Bangalore (IN); VENKATESHAIAH, Harish, Bangalore (IN)
(74) Representative: Dehns

(56) References cited:
- US-A1- 2020 094 976
- US-A1- 2021 354 835

## Description

### CROSS-REFERENCE TO RELATED APPLICATIONS

This application claims priority to, and the benefit of, India Patent Application No. 202241012531, filed March 8, 2022 and titled "STRETCH SENSOR ASSEMBLY AND METHOD OF ASSEMBLING STRETCH SENSOR ASSEMBLIES FOR EVACUATION SYSTEM INFLATABLES".

### FIELD

The present disclosure relates generally to inflatable evacuation systems and, more particularly, to methods and assemblies for coupling stretch sensors to evacuation system inflatables.

### BACKGROUND

Inflatable evacuation systems may be found on various structures, including aircraft, boats, offshore drilling platforms, and the like. The systems are typically equipped with an inflatable device, such as, for example, an inflatable slide or an inflatable raft, configured to facilitate rapid evacuation of persons in the event of an emergency. The slides or rafts are typically stored in an uninflated condition on the structure - *e.g.,* a commercial aircraft - in a location readily accessible for deployment.

Systems used to inflate the slide or raft typically employ gas stored within a cylinder or tank at high pressure, which is discharged into the inflatable. Due to changes in the densities of gasses caused by variations in temperature, the volume of gas needed to achieve the desired inflation pressure varies with ambient temperature. Some slides and rafts may also include stretch sensors as part of a closed loop system to control the pressure within the inflatable during the inflation process. Coupling the stretch sensors to the inflatable tends to be a tedious process. Further, the sensors need to be accessible for periodic health checks. US 2021/354835 A1 describes a stretch control system for inflatable evacuation slide.

### SUMMARY

A stretch sensor assembly is provided as defined by claim 1. The stretch sensor assembly comprises a stretch sensor, a first housing, and a second housing. The stretch sensor includes a first mounting end, a second mounting end, and a sensing region extending between the first mounting end and the second mounting end. The first housing defines a connector opening. The first mounting end is located in the first housing. The second housing is located around the second mounting end.

In various embodiments, the first mounting end may include sensor circuitry and a sensor electrical connector. In various embodiments, the first housing may include a first housing portion and a second housing portion coupled to the first housing portion. The first housing portion may define a recess configured to receive the first mounting end.

In various embodiments, a printed circuit board may be located in the first housing and electrically connected to the sensor electrical connector. The printed circuit board may include a printed circuit board electrical connector aligned with the connector opening in the first housing.

In various embodiments, a first portion of a first releasable connection may be coupled to the first housing, and a first portion of a second releasable connection may be coupled to the second housing. In various embodiments, the stretch sensor assembly may further comprise a first patch, a second portion of the first releasable connection coupled to the first patch, a second patch, and a second portion of the second releasable connection coupled to the second patch. In various embodiments, each of the first releasable connection and the second releasable connection may comprise a snap fastener.

An evacuation system is provided as define by claim 7. In accordance with various embodiments, the evacuation system may comprise an evacuation slide including an inflatable tube, and a stretch sensor assembly mounted to the inflatable tube. The stretch sensor assembly may include a stretch sensor, a first housing, and a second housing. The stretch sensor may comprise a first mounting end, a second mounting end, and a sensing region extending between the first mounting end and the second mounting end. The first housing may be coupled to a first location on the inflatable tube. The first housing may define a connector opening and may be located around the first mounting end. The second housing may be coupled to a second location on the inflatable tube and may be located around the second mounting end.

**In** various embodiments, the stretch sensor assembly may further comprise a first patch bonded to the first location on the inflatable tube, a first releasable connection coupled between the first housing and the first patch, a second patch bonded to the second location on the inflatable tube, and a second releasable connection coupled between the second housing and the second patch.

In various embodiments, a first portion of the first releasable connection may be coupled to the first housing and a second portion of the first releasable connection may be coupled to the first patch. A first portion of the second releasable connection may be coupled to the second housing and a second portion of the second releasable connection may be coupled to the second patch.

In various embodiments, a cover may be located over the stretch sensor assembly and attached to the inflatable tube.

In various embodiments, the first mounting end of the stretch sensor may include sensor circuitry and a sensor electrical connector. The stretch sensor assembly may further comprise a printed circuit board located in the first housing and electrically connected to the sensor circuitry via the sensor electrical connector. The printed circuit board may include a printed circuit board electrical connector aligned with the connector opening in the first housing.

In various embodiments, a compressed fluid source may be fluidly coupled to the inflatable tube. A valve assembly may be connected to the compressed fluid source and configured to control a flow of gas to the inflatable tube. A controller may be operably coupled to the valve assembly and configured to send control signals to the valve assembly. The control signals may be configured to cause the valve assembly to translate between a closed position and an open position. The controller may be configured to determine whether to open the valve assembly or close the valve assembly based on stretch data output by the stretch sensor.

In various embodiments, a stretch sensor link may be electrically coupled to the controller and the printed circuit board electrical connector.

In various embodiments, a first adhesive may be bonded to the first housing and to the inflatable tube. A second adhesive may be bonded to the second housing and to the inflatable tube.

A method for assembling a stretch sensor assembly according to claim 12 is also disclosed herein. The method comprises the steps of locating a first mounting end of a stretch sensor in a first housing, locating a second mounting end of the stretch sensor in a second housing, coupling the first housing to a first patch, and coupling the second housing to a second patch.

In various embodiments, locating the first mounting end of the stretch sensor in the first housing may comprise locating the first mounting end of the stretch sensor in a first recess defined by a first portion of the first housing, locating a second portion of the first housing over the first mounting end, and locating a first fastener through the first portion of the first housing, the first mounting end, and the second portion of the first housing.

In various embodiments, the method may further comprise electrically connecting a printed circuit board to a sensor electrical connector of the first mounting end and locating the printed circuit board in the first recess with a printed circuit board electrical connector aligned with a connector opening defined by the first portion of the first housing.

In various embodiments, coupling the first housing to the first patch may comprise coupling a first portion of a first releasable connection to the first housing, coupling a second portion of the first releasable connection to the first patch, and coupling the first portion of the first releasable connection to the second portion of the first releasable connection. Coupling the second housing to the second patch may comprise coupling a first portion of a second releasable connection to the second housing, coupling a second portion of the second releasable connection to the second patch, and coupling the first portion of the second releasable connection to the second portion of the second releasable connection.

In various embodiments, the method may further comprise coupling the first patch to a first location on an inflatable tube, coupling the second patch to a second location on the inflatable tube, and locating a cover over the first housing and the second housing.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having an evacuation assembly, in accordance with various embodiments;
FIG. 2 illustrates an evacuation slide in a deployed position, in accordance with various embodiments;
FIG. 3 illustrates a schematic of an inflation control system, in accordance with various embodiments;
FIGs. 4A and 4B illustrate an exploded view and an assembled view, respectively, of a stretch sensor assembly, in accordance with various embodiments;
FIGs. 5A and 5B illustrate a top view and a side view, respectively, of a stretch sensor assembly coupled to an inflatable tube, in accordance with various embodiments;
FIG. 5C illustrates a top view of a cover located over a stretch sensor assembly coupled to an inflatable tube, in accordance with various embodiments;
FIGs. 6A, 6B, and 6C illustrate a method for assembling a stretch sensor assembly, in accordance with various embodiments; and
FIGs. 7A and 7B illustrate a top view and a side view, respectively, of a stretch sensor assembly coupled directly to an inflatable tube, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and within the scope of the claims. Thus, the detailed description herein is presented for purposes of illustration only and not limitation.

Surface lines may be used throughout the figures to denote different parts but not necessarily to denote the same or different materials. Throughout the present disclosure, like reference numbers denote like elements. Accordingly, elements with like element numbering may be shown in the figures but may not necessarily be repeated herein for the sake of brevity.

The systems and methods disclosed herein may find particular use in connection with aircraft evacuation slides. However, various aspects of the disclosed assemblies and methods may be adapted for performance in a variety of other inflatable assemblies, for example, inflatable raft assemblies, and/or any other assemblies having inflatable structures. As such, numerous applications of the present disclosure may be realized.

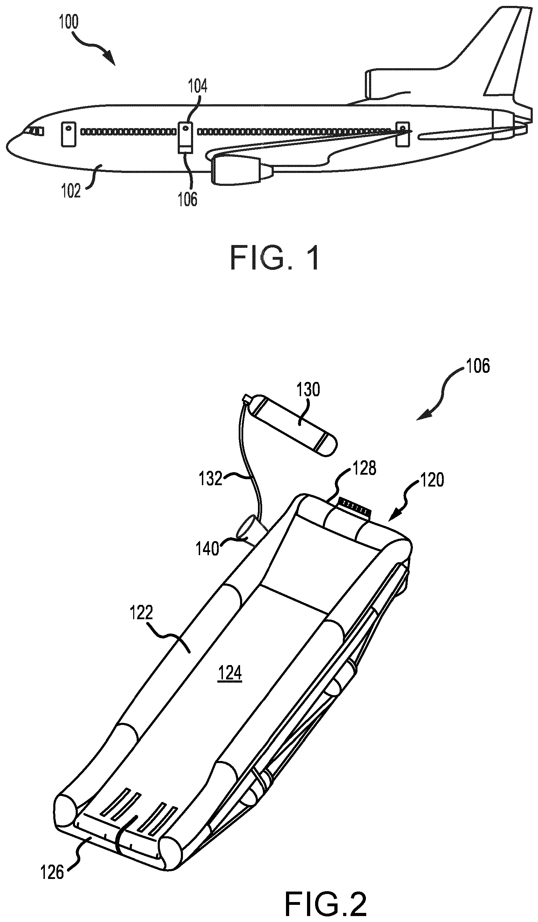

Referring now to FIG. 1, an aircraft 100 is shown. Aircraft 100 may include a fuselage 102 having a plurality of exit doors, including an exit door 104. Aircraft 100 may include one or more evacuation systems positioned near a corresponding exit door. For example, aircraft 100 includes an evacuation system 106 positioned near exit door 104. In the event of an emergency, exit door 104 may be opened by a passenger or crew member of aircraft 100. In various embodiments, evacuation system 106 may deploy in response to exit door 104 being opened. It is contemplated and understood that evacuation system 106 may deploy in response to other actions taken by a passenger or crew member such as, for example, depression of a button, actuation of a lever, or the like.

With reference to FIG. 2, evacuation system 106 is illustrated in a deployed state. In accordance with various embodiments, evacuation system 106 includes an evacuation slide 120 and a compressed fluid source 130 configured to deliver a pressurized gas to inflate evacuation slide 120. In FIG. 2, evacuation slide 120 is in an inflated (i.e., deployed) state. During deployment, an inflatable tube 122 (or a plurality of inflatable tubes) of evacuation slide 120 is inflated using pressurized gas from compressed fluid source 130. Evacuation slide 120 may comprise a sliding surface 124 secured to the inflatable tube 122. Evacuation slide 120 includes a toe end 126 and a head end 128 opposite toe end 126. Head end 128 may be coupled to an aircraft structure (e.g., fuselage 102 in FIG. 1). Sliding surface 124 extends from head end 128 to toe end 126. Evacuation slide 120 is illustrated as a single lane slide. However, evacuation slide 120 may comprise any number of lanes.

Compressed fluid source 130 is fluidly coupled to evacuation slide 120. For example, compressed fluid source 130 may be fluidly coupled to inflatable tube 122 via a hose, or conduit, 132. In various embodiments, evacuation system 106 may include an aspirator 140 fluidly coupled between compressed fluid source 130 and evacuation slide 120. Aspirator 140 is configured to entrain ambient air with gas output from compressed fluid source 130. For example, in response to deployment of evacuation slide 120, the gas from compressed fluid source 130 flows into aspirator 140 and causes aspirator 140 to draw in ambient air from the environment. The combination of the gas flow from compressed fluid source 130 and the environmental gas is then directed into evacuation slide 120, thereby inflating inflatable tube 122.

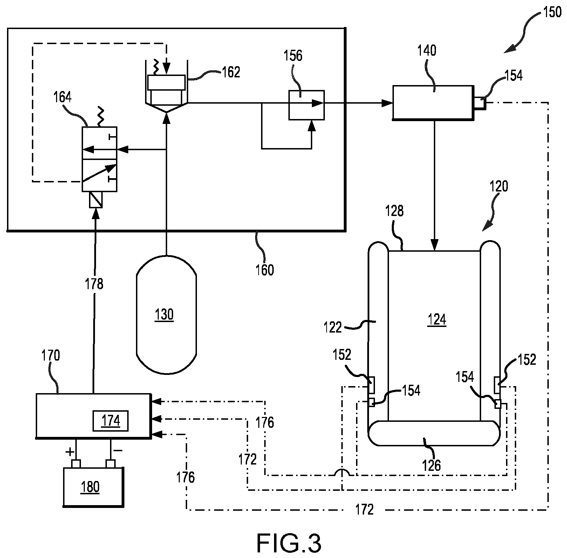

Referring now to FIG. 3, an inflation control system 150 of evacuation system 106 is illustrated. In accordance with various embodiments, inflation control system 150 is configured to control inflation of evacuation slide 120. Inflation control system 150 includes one or more stretch sensor assemblies 152 configured to monitor the inflation of evacuation slide 120. Stretch sensor assemblies 152 may be mounted on the inflatable tube 122 of evacuation slide 120. Stretch sensor assemblies 152 are configured to monitor an elastic stretch or an elastic deformation of the fabric that forms inflatable tube 122 during the inflation process. Real-time data output by stretch sensor assemblies 152 and correlating to the elastic stretch experienced by the inflatable tube 122 (referred to herein as stretch data) may be sent to a controller 170 during the inflation process. In various embodiments, the real-time stretch data from the stretch sensor assemblies 152 may be sent to controller 170 via one or more stretch sensor link(s) 172. In various embodiments, power may also be provided to stretch sensor assemblies 152 via stretch sensor link(s) 172. As described in further detail below, controller 170 employs the real-time stretch data to control the inflation of evacuation slide 120.

In various embodiments, the controller 170 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. A tangible, non-transitory computer-readable storage medium 174 may be in communication with controller 170. Storage medium 174 may comprise any tangible, non-transitory computer-readable storage medium known in the art. The storage medium 174 has instructions stored thereon that, in response to execution by controller 170, cause controller 170 to perform operations related to controlling the inflation of evacuation slide 120.

In accordance with various embodiments, inflation control system 150 further includes a valve assembly 160, compressed fluid source 130, which is filled with a high-pressure gas (or, in various embodiments, a gas generator configured to generate a high-pressure gas), aspirator 140, controller 170, and a power source 180, such as, for example, a battery or charged capacitor. In various embodiments, the power source 180 is a dedicated power source configured to power the stretch sensor assemblies 152, the temperature sensors 154, as well as each of the valve assembly 160 and the controller 170. To provide a dedicated source of current power, the power source 180 may comprise, for example, a lithium-ion battery or an ultracapacitor, each configured to store energy at a high density for controlling the rapid sequence of events that occur during an inflation process of the evacuation slide 120. In various embodiments, one or more of stretch sensor assemblies 152, temperature sensors 154, valve assembly 160, and/or the controller 170 may receive power from an aircraft power source.

In various embodiments, inflation control system 150 may further include one or more temperature sensors 154 configured to sense or monitor the ambient temperature during the inflation process. In various embodiments, at least one temperature sensor 154 is coupled to aspirator 140 and at least one temperature sensor 154 is coupled to evacuation slide 120. Temperature sensors 154 may output real-time temperature measurements to controller 170. Real-time data from the temperature sensors 154 (i.e., real-time temperature measurements) may be sent to controller 170 via a temperature sensor link 176. Temperature sensor link(s) 176 may provide wired or wireless communication between temperature sensors 154 and controller 170. In various embodiments, controller 170 may be configured to the make decisions regarding the inflation of evacuation slide 120 based on the real-time temperature measurements and the real-time stretch data.

In accordance with various embodiments, the valve assembly 160 is configured to open and close a main pneumatic valve 162 based on control signals 178 received from the controller 170. More specifically, based on preset control logic and the real-time data received from the stretch sensor assemblies 152, controller 170 actuates the main pneumatic valve 162 in order to turn on or turn off the flow of high-pressure gas from the compressed fluid source 130 to the inflatable tube 122. In various embodiments, the valve assembly 160 may further comprise a control valve 164 configured to operate the main pneumatic valve 162 between an open position and a closed position. In various embodiments, the valve assembly 160 may also include a pressure regulator valve 156 configured to prevent the occurrence of an overpressure situation at the aspirator 140 or the inflatable tube 122.

In various embodiments, control valve 164 may be an open valve, such as, for example, a three-way, two-position open solenoid valve, and main pneumatic valve 162 may be a closed poppet valve. In this regard, energizing control valve 164 (i.e., providing electric current to control valve 164), opens the main pneumatic valve 162, thereby allowing fluid from compressed fluid source 130 to flow through aspirator 140 and into evacuation slide 120. Deenergizing control valve 164 (i.e., stopping the flow of electric current to control valve 164) closes main pneumatic valve 162, thereby blocking or otherwise preventing the flow of fluid from compressed fluid source 130 to aspirator 140 and evacuation slide 120.

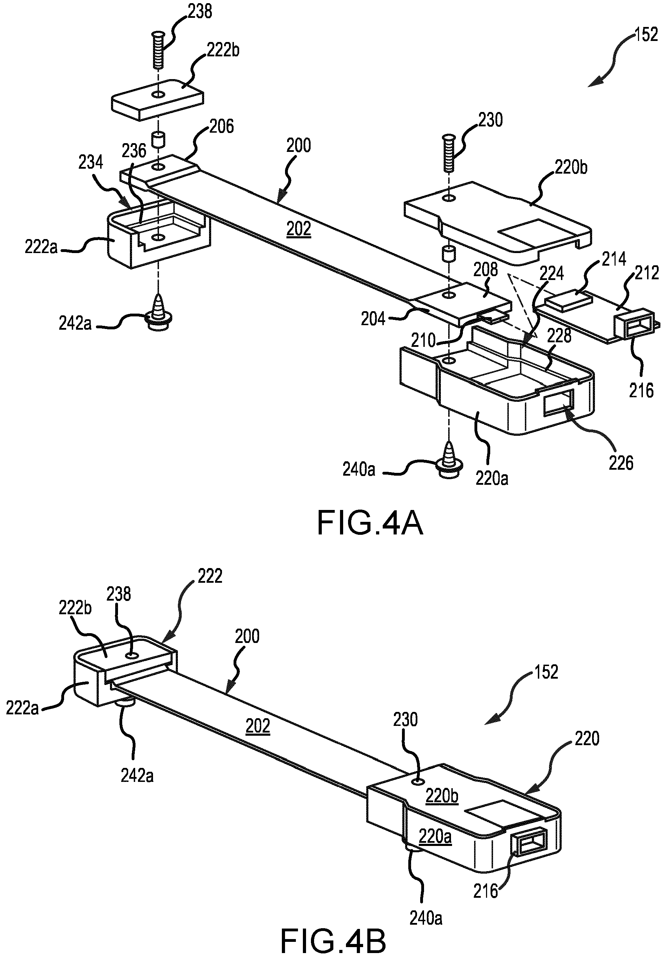

With reference to FIGs. 4A and 4B, an exploded view and an assembled view of a stretch sensor assembly 152 is shown, in accordance with various embodiments. Stretch sensor assembly 152 includes stretch sensor 200. Stretch sensor 200 includes sensing region 202, a first mounting end 204, and a second mounting end 206. Sensing region 202 extends from first mounting end 204 to second mounting end 206. In various embodiments, sensing region 202 may be configured as a flexible parallel plate capacitor. First mounting end 204 may include sensor circuitry 208 and a sensor electrical connector 210.

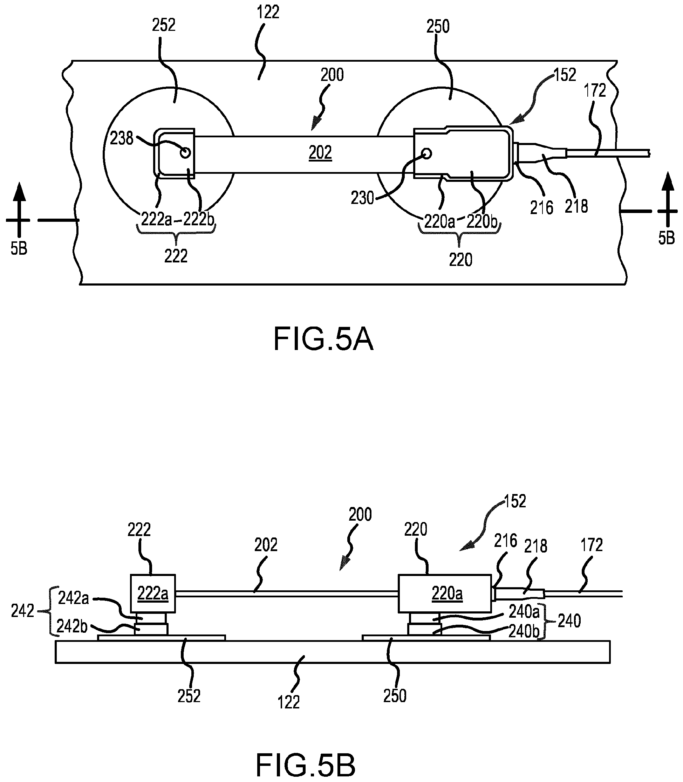

Stretch sensor assembly 152 further includes a sensor printed circuit board (PCB) 212. Sensor PCB 212 includes a PCB electrical connector 214 (e.g., a first PCB electrical connector 214) configured to mate with sensor electrical connector 210. Stated differently, PCB electrical connector 214 is configured to electrically connect to sensor electrical connector 210, thereby electrically connecting the sensor circuitry 208 with the circuitry and/or electoral components of sensor PCB 212. Sensor PCB 212 includes a PCB electrical connector 216 (e.g., a second PCB electrical connector 216). PCB electrical connector 216 is configured to mate with a link electrical connector 218 (FIG. 5A) of stretch sensor link 172. Stated differently, PCB electrical connector 216 is configured to electrically connect to link electrical connector 218, thereby electrically connecting the circuitry and/or electrical components of sensor PCB 212 with stretch sensor link 172.

Stretch sensor assembly 152 further includes a first housing 220 and a second housing 222. First housing 220 includes a first housing first portion 220a and a first housing second portion 220b. Second housing 222 includes a second housing first portion 222a and a second housing second portion 222b. First portion 220a of first housing 220 defines a recess 224 configured to receive first mounting end 204 and sensor PCB 212. In various embodiments, first portion 220a of first housing 220 defines a connector opening 226 configured to align with and/or receive PCB electrical connector 216. In this regard, PCB electrical connector 216 of sensor PCB 212 may be located through connector opening 226. In various embodiments, an end of PCB electrical connector 216 may extend from (e.g., extend past) the surface defining connector opening 226. In various embodiments, the end of PCB electrical connector 216 may be flush, or slightly recessed, with respect to the surface defining connector opening 226. In various embodiments, a sealant may be located in the area between first portion 220a of first housing 220 and PCB electrical connector 216 to protect the circuity located within first housing 220 from the external elements (e.g., to protect first mounting end 204 and sensor PCB 212). For example, the area between first portion 220a and PCB electrical connector 216 may be filled (e.g., sealed) with a room temperature vulcanizing (RTV) compound, such as RTV silicon sealant(s).

In various embodiments, first portion 220a of first housing 220 may receive second portion 220b. For example, first portion 220a may include a lip 228 extending from an internal surface of first portion 220a, and second portion 220b may rest on, or otherwise contact, the lip 228. A first fastener 230 may extend through second portion 220b, first mounting end 204, and first portion 220a, thereby securing second portion 220b and first mounting end 204 to first portion 220a. In various embodiments, an electrical insulator, such as a plastic bushing or plastic sleeve, may be located around first fastener 230 to electrically isolate first mounting end 204 from first fastener 230. Stated differently, an electrical insulator may be located between first fastener 230 and first mounting end 204. In various embodiments, a sealant may be located at the interface between first portion 220a and second portion 220b of first housing 220 to protect the circuity located within first housing 220 from external elements. For example, the interface between first portion 220a and second portion 220b may be filled (e.g., sealed) with a RTV compound, such as RTV silicon sealant(s).

First portion 222a of second housing 222 defines a recess 234 configured to receive second mounting end 206. First portion 222a may also receive second portion 222b. For example, first portion 222a may include a lip 236 extending from an internal surface of first portion 222a, and second portion 222b may rest on, or otherwise contact, the lip 236. A second fastener 238 may extend through second portion 222b, second mounting end 206, and first portion 222a, thereby securing second portion 222b and second mounting end 206 to first portion 222a. In various embodiments, an electrical insulator, such as a plastic bushing or plastic sleeve, may be located around second fastener 238 to electrically isolate second mounting end 206 from second fastener 238. Stated differently, an electrical insulator may be located between second fastener 238 and second mounting end 206. In various embodiments, a sealant may be located at the interface between first portion 222a and second portion 222b to protect second mounting end 206 from external elements. For example, the interface between first portion 222a and second portion 222b may be filled (e.g., sealed) with a RTV compound, such as RTV silicon sealant(s).

In accordance with various embodiments, a first portion 240a of a first releasable connection 240 (FIG. 5B) is coupled to first portion 220a of first housing 220. As described in further detail below, first portion 240a is releasably coupled to a second portion 240b of first releasable connection 240 (FIG. 5B). In various embodiments, first portion 240a may be coupled to first portion 220a of first housing 220 via threaded engagement between first portion 240a of first releasable connection 240 and first portion 220a of first housing 220.

In accordance with various embodiments, a first portion 242a of a second releasable connection 242 (FIG. 5B) is coupled to first portion 222a of second housing 222. As described in further detail below, first portion 242a is releasably coupled to a second portion 242b of second releasable connection 242 (FIG. 5B). In various embodiments, first portion 242a may be coupled to first portion 222a of second housing 222 via threaded engagement between first portion 242a of second releasable connection 240 and first portion 222a of second housing 222.

With reference to FIGs. 5A and 5B, a plan view and a side view, respectively, of a stretch sensor assembly 152 mounted to inflatable tube 122 is illustrated, according to various embodiments. In accordance with various embodiments, stretch sensor assembly 152 may further include a first patch 250. First housing 220 is releasably coupled to first patch 250 via first releasable connection 240. In this regard, first portion 240a of first releasable connection 240 is coupled to first housing first portion 220a, and second portion 240b of first releasable connection 240 is coupled to first patch 250. In various embodiments, first releasable connection 240 comprises a snap fastener. In this regard, first portion 240a of first releasable connection 240 may be a stud of the snap fastener or a socket of the snap fastener and second portion 240b of first releasable connection 240 is the other of the stud or the socket of the snap fastener.

In accordance with various embodiments, stretch sensor assembly 152 may further include a second patch 252. Second housing 222 is releasably coupled to second patch 252 via second releasable connection 242. In this regard, first portion 242a of second releasable connection 242 is coupled to second housing first portion 222a and second portion 242b of second releasable connection 242 is coupled to second patch 252. In various embodiments, second releasable connection 242 comprises a snap fastener. In this regard, first portion 242a of second releasable connection 242 may be a stud of the snap fastener or a socket of the snap fastener and second portion 242b of second releasable connection 242 is the other of the stud or the socket of the snap fastener. While first releasable connection 240 and second releasable connection 242 are described as snap fasteners, the present disclosure is not limited in this regard. For example, in various embodiments, first releasable connection 240 may comprise a hook and loop fasteners, clips, tape, or any other releasable fastening system. First releasable connection 240 and second releasable connection 242 allow stretch sensor assembly 152 to be easily removed from inflatable tube 122 to check a health of stretch sensor assembly 152 and/or to replace stretch sensor assembly 152 and/or to replace one of more components of stretch sensor assembly 152.

In accordance with various embodiments, first patch 250 and second patch 252 are each coupled to inflatable tube 122. In various embodiments, the material of each of first patch 250 and second patch 252 is the same as the material of inflatable tube 122. In various embodiments, first patch 250 and second patch 252 may be bonded to inflatable tube 122 via an adhesive (e.g., a polyurethane, polyurea, epoxy, and/or polyimide adhesive). In various embodiments, first patch 250 and second patch 252 may be bonded to inflatable tube 122 using radio frequency (RF) welding, hot gas (e.g., hot air) welding, laser welding, or any other suitable bonding process. Employing RF, hot gas, and/or laser welding to attached first and second patches 250, 252 may allow for elimination of solvents during the bonding process.

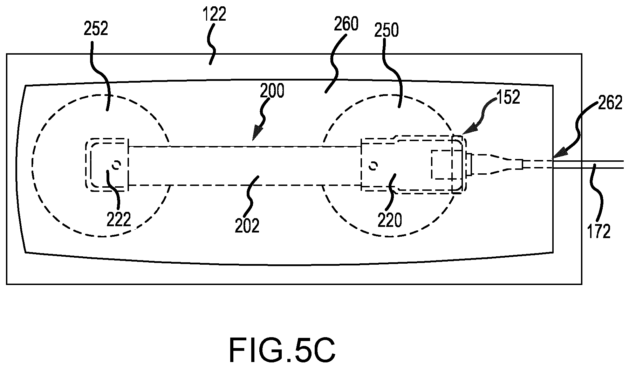

With reference to FIG. 5C, in various embodiments, a cover 260 may be located over stretch sensor assembly 152. Cover 260 may be configured to cover stretch sensor assembly 152. For example, cover 260 may cover stretch sensor 200 and first and second housings 220, 222 of stretch sensor assembly. In this regard, stretch sensor assembly 152 is located between cover 260 and inflatable tube 122. Cover 260 may be attached to inflatable tube 122 via adhesive, radio frequency welding, hot gas welding, laser welding, or any other suitable bonding method. In various embodiments, the bond between cover 260 and inflatable tube 122 may form a sealing interface between cover 260 and inflatable tube 122. The sealing interface may prevent outside elements (water, dirt, debris, etc.) from entering the space between cover 260 and inflatable tube 122, thereby protecting stretch sensor assembly 152 from outside elements. In various embodiments, cover 260 may be attached to inflatable tube 122 via, hook and loop fasteners, tape, or any other suitable attachment means. In various embodiments, the material of cover 260 may be the same as the material of inflatable tube 122. In various embodiments, stretch sensor link 172 extends through a link opening 262 defined between cover 260 and inflatable tube 122. In various embodiments, a sealant may be located in link opening 262. For example, the area between stretch sensor link 172 and cover 260 and between stretch sensor link 172 and inflatable tube 122 may be filled (e.g., sealed) with a RTV compound, such as RTV silicon sealant(s).

The stretch sensor assembly 152 is configured to protect the stretch sensor 200. For example, first housing 220 and second housing 222 protect various electrical interfaces of stretch sensor 200. In this regard, first and second mounting ends 204, 206 of stretch sensor are protected from exposure to the external environment. Further, stretch sensor assembly 152 can be easily removed from inflatable tube 122 and/or dismantled for periodical health checkups of the stretch sensor 200.

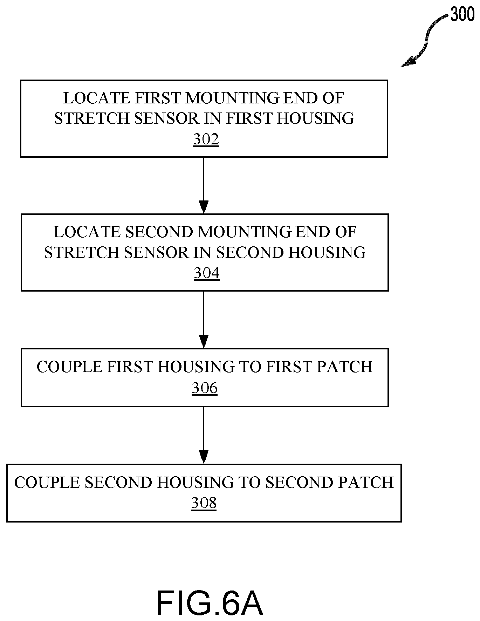

With reference to FIG. 6A, a method 300 for assembling a stretch sensor assembly is illustrated. In accordance with various embodiments, method 300 may comprise locating a first mounting end of a stretch sensor in a first housing (step 302), locating a second mounting end of the stretch sensor in a second housing (step 304), coupling the first housing to a first patch (step 306), and coupling the second housing to a second patch (step 308).

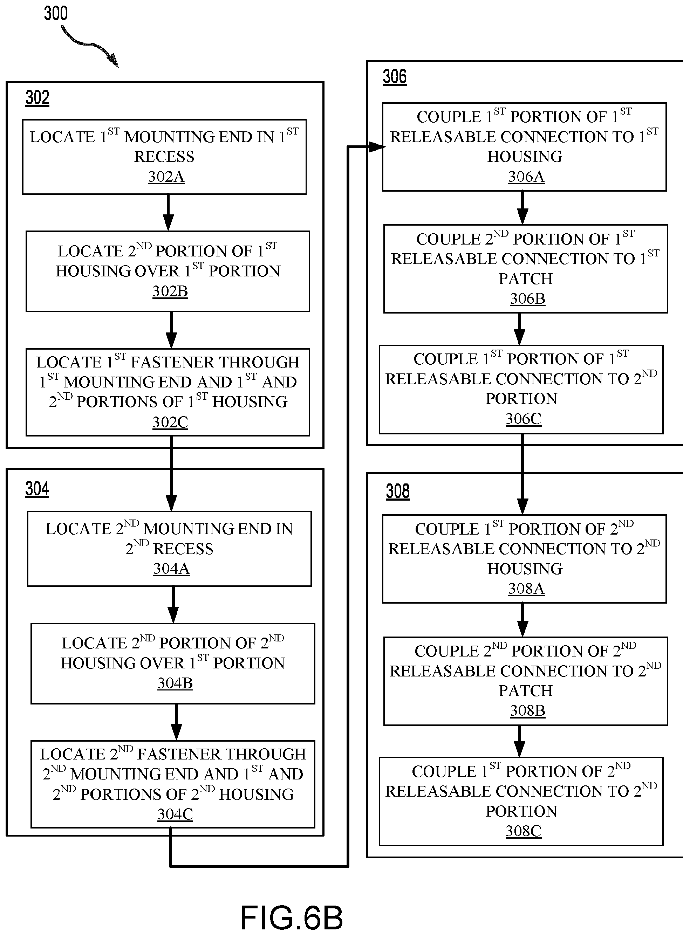

With reference to FIG. 6B, in various embodiments, step 302 may include locating the first mounting end of the stretch sensor in a first recess defined by a first portion of the first housing (step 302A), locating a second portion of the first housing over the first mounting end (step 302B), and locating a first fastener through the first portion of the first housing, the first mounting end, and the second portion of the first housing (step 302C).

In various embodiments, step 304 may include locating the second mounting end of the stretch sensor in a second recess defined by a first portion of the second housing (step 304A), locating a second portion of the second housing over the second mounting end (step 304B), and locating a second fastener through the first portion of the second housing, the second mounting end, and the second portion of the second housing (step 304C).

In various embodiments, step 306 may include coupling a first portion of a first releasable connection to the first housing (step 306A), coupling a second portion of the first releasable connection to the first patch (step 306B), and coupling the first portion of the first releasable connection to the second portion of the first releasable connection (step 306C). In various embodiments, step 308 may include coupling a first portion of a second releasable connection to the second housing (step 308A), coupling a second portion of the second releasable connection to the second patch (step 306B), and coupling the first portion of the second releasable connection to the second portion of the second releasable connection (step 306C).

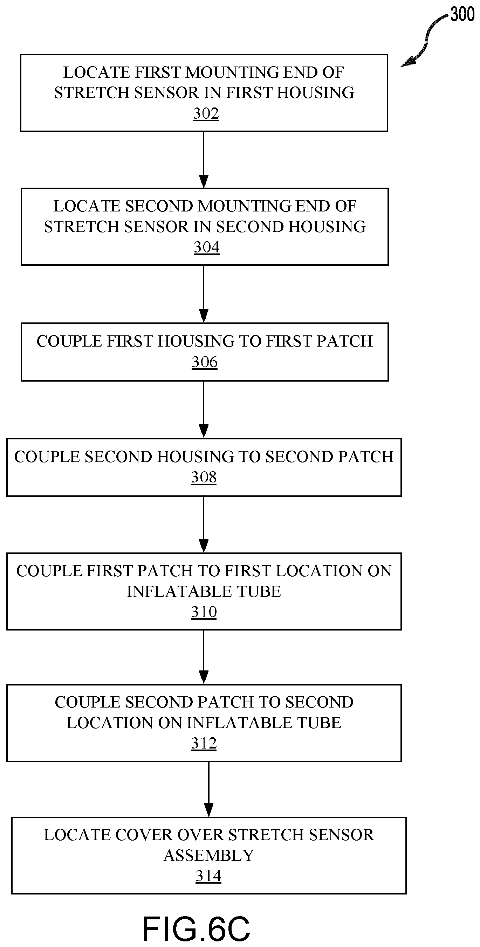

With reference to FIG. 6C, in various embodiments, method 300 may further comprise coupling the first patch to a first location on an inflatable tube (step 310), coupling the second patch to a second location on the inflatable tube (step 312), and locating a cover over the first housing and the second housing (step 314).

In various embodiments, method 300 may further comprise electrically connecting a printed circuit board to a sensor electrical connector of the first mounting end and locating the printed circuit board in the first recess with a printed circuit board electrical connector aligned with a connector opening defined by the first portion of the first housing. In various embodiments, the printed circuit board may be connected to the sensor electrical connector prior to step 302 such that during step 302 the first mounting end the printed circuit board are located in the first recess together (e.g., simultaneously). In various embodiments, the printed circuit board may be located in the first recess prior to step 302. In this regard, the sensor electrical connector may be electrically connected to the printed circuit board with the printed circuit board located in the first recess. In various embodiments, method 300 may further include electrically coupling a stretch sensor link to printed circuit board electrical connector. In various embodiments, step 314 may be performed after connecting the stretch sensor link to printed circuit board electrical connector.

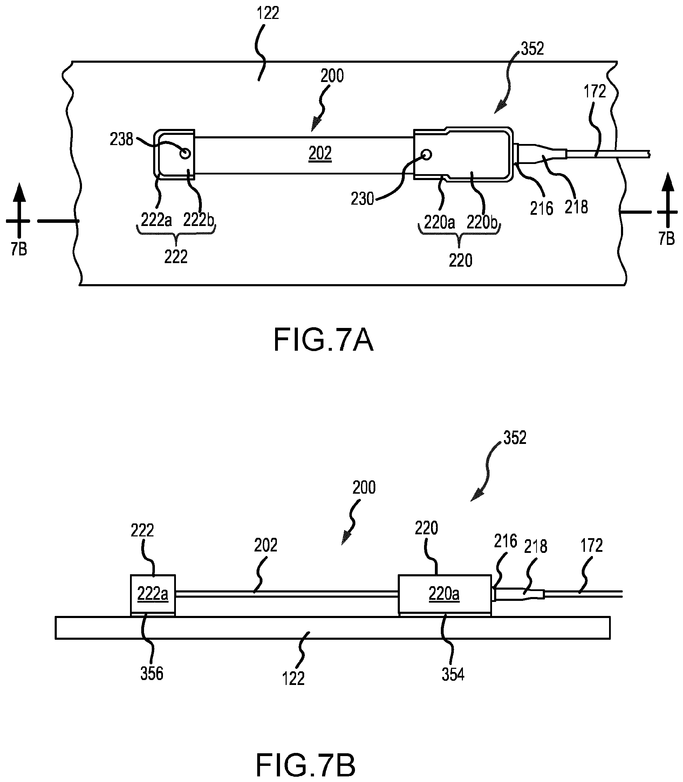

With reference to FIGs. 7A and 7B, a plan view and a side view, respectively, of a stretch sensor assembly 352 mounted to inflatable tube 122 is illustrated, according to various embodiments. In accordance with various embodiments, stretch sensor assembly 352 includes stretch sensor 200, first housing 220, and second housing 222, as described above. In accordance with various embodiments, first housing 220 and second housing 222 may each be coupled directly to inflatable tube 122. For example, a first adhesive 354 may be bonded to first portion 220a of first housing 220 and to inflatable tube 122, and a second adhesive 356 may be bonded to first portion 222a of second housing 222 and to inflatable tube 122. First adhesive 354 may be the same type of adhesive as second adhesive 356. First and second adhesives 354, 356 may comprise a polyurethane adhesive, polyurea adhesive, epoxy adhesive, polyimide adhesive, and/or any other adhesive capable of bonding first and second housings 220, 222 to inflatable tube 122. In various embodiments, cover 260 (FIG. 5C) may be located over stretch sensor assembly 352.

Benefits and other advantages have been described herein with regard to specific embodiments. Furthermore, the connecting lines shown in the various figures contained herein are intended to represent exemplary functional relationships and/or physical couplings between the various elements. The scope of the disclosure is to be limited by nothing other than the appended claims.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment.

## Claims

1. A stretch sensor assembly (152, 352), comprising:
a stretch sensor (200) including a first mounting end (204), a second mounting end (206), and a sensing region (202) extending between the first mounting end (204) and the second mounting end (206);
a first housing (220) defining a connector opening (226), the first mounting end (204) being located in the first housing (220); and
**characterised in that** the stretch sensor assembly further comprises
a second housing (222) located around the second mounting end (206).

2. The stretch sensor assembly (152, 352) of claim 1, wherein the first mounting end (204) includes sensor circuitry (208) and a sensor electrical connector (210).

3. The stretch sensor assembly (152, 352) of claim 2, wherein the first housing (220) includes a first housing portion (220a) and a second housing portion (220b) coupled to the first housing portion (220a), the first housing portion (220a) defining a recess (224) configured to receive the first mounting end (204).

4. The stretch sensor assembly (152, 352) of claim 3, further comprising a printed circuit board (212) located in the first housing (220) and electrically connected to the sensor electrical connector (214), the printed circuit board (212) including a printed circuit board electrical connector (214) aligned with the connector opening (226) in the first housing (220).

5. The stretch sensor assembly (152, 352) of any preceding claim, further comprising:
a first patch (250) configured to be coupled to an inflatable tube (122);
a second patch (252) configured to be coupled to the inflatable tube (122);
a first releasable connection (240) including a first portion (240a) coupled to the first housing (220) and a second portion (240b) coupled to the first patch (250); and
a second releasable connection (242) including a first portion (242a) coupled to the second housing (222) and a second portion (242b) coupled to the second patch (252).

6. The stretch sensor assembly (152, 352) of claim 5, wherein each of the first releasable connection (240) and the second releasable connection (242) comprises a snap fastener.

7. An evacuation system (106), comprising:
an evacuation slide (120) including an inflatable tube (122); and
a stretch sensor assembly (152, 352), as claimed in claim 1,
mounted to the inflatable tube (122), wherein the first housing (220) is coupled to a first location on the inflatable tube (122) and wherein the second housing (222) is coupled to a second location on the inflatable tube (122).

8. The evacuation system (106) of claim 7, wherein the stretch sensor assembly (152, 352) further comprises:
a first patch (250) bonded to the first location on the inflatable tube (122);
a first releasable connection (240) coupled between the first housing (220) and the first patch (250);
a second patch (252) bonded to the second location on the inflatable tube (122); and
a second releasable connection (242) coupled between the second housing (222) and the second patch (252), and preferably wherein a first portion (240a) of the first releasable connection (240) is coupled to the first housing (220) and a second portion (240b) of the first releasable connection (240) is coupled to the first patch (250), and wherein a first portion (242a) of the second releasable connection (242) is coupled to the second housing (222) and a second portion (242b) of the second releasable connection (242) is coupled to the second patch (252).

9. The evacuation system (106) of claim 7 or 8, further comprising a cover (260) located over the stretch sensor assembly (152,352) and attached to the inflatable tube (122).

10. The evacuation system (106) of any of claims 7 - 9, wherein the first mounting end (204) of the stretch sensor includes sensor circuitry and a sensor electrical connector, and wherein the stretch sensor assembly (152, 352) further comprises a printed circuit board (212) located in the first housing (220) and electrically connected to the sensor circuitry via the sensor electrical connector, the printed circuit board (212) including a printed circuit board electrical connector (214) aligned with the connector opening (226) in the first housing (220), and preferably further comprising:
a compressed fluid source (130) fluidly coupled to the inflatable tube (122);
a valve assembly (160) connected to the compressed fluid source (130) and configured to control a flow of gas to the inflatable tube (122); and
a controller (170) operably coupled to the valve assembly (160) and configured to send control signals to the valve assembly (160), the control signals being configured to cause the valve assembly (160) to translate between a closed position and an open position, wherein the controller (170) is configured to determine whether to open the valve assembly (160) or close the valve assembly (160) based on stretch data output by the stretch sensor, and more preferably further comprising a stretch sensor link electrically coupled to the controller (170) and the printed circuit board (212) electrical connector (214).

11. The evacuation system (106) of any of claims 7-10, further comprising:
a first adhesive (354) bonded to the first housing (220) and the inflatable tube (122); and
a second adhesive (356) bonded to the second housing (222) and the inflatable tube (122).

12. A method for assembling the stretch sensor assembly (152, 352) of claim 1, comprising:
locating a first mounting end (204) of a stretch sensor (200) in a first housing (220);
locating a second mounting end (206) of the stretch sensor (200) in a second housing (222);
coupling the first housing (220) to a first patch (250); and
coupling the second housing (222) to a second patch (252).

13. The method of claim 12, wherein locating the first mounting end (204) of the stretch sensor in the first housing (220) comprises:
locating the first mounting end (204) of the stretch sensor in a first recess defined by a first portion of the first housing (220);
locating a second portion of the first housing (220) over the first mounting end (204); and
locating a first fastener (230) through the first portion of the first housing (220), the first mounting end (204), and the second portion of the first housing (220), and preferably further comprising:
electrically connecting a printed circuit board (212) to a sensor electrical connector of the first mounting end (204); and
locating the printed circuit board (212) in the first recess with a printed circuit board (212) electrical connector aligned with a connector opening defined by the first portion of the first housing (220).

14. The method of claim 12 or 13, wherein coupling the first housing (220) to the first patch (250) comprises:
coupling a first portion of a first releasable connection (240) to the first housing (220);
coupling a second portion of the first releasable connection (240) to the first patch (250); and
coupling the first portion of the first releasable connection (240) to the second portion of the first releasable connection (240), and
wherein coupling the second housing (222) to the second patch (252) comprises:
coupling a first portion of a second releasable connection (242) to the second housing (222);
coupling a second portion of the second releasable connection (242) to the second patch (252); and
coupling the first portion of the second releasable connection (242) to the second portion of the second releasable connection (242).

15. The method of claim 14, further comprising:
coupling the first patch (250) to a first location on an inflatable tube (122);
coupling the second patch (252) to a second location on the inflatable tube (122); and
locating a cover (260) over the first housing (220) and the second housing (222).

## Patentansprüche

1. Dehnungssensoranordnung (152, 352), umfassend:
einen Dehnungssensor (200), der ein erstes Befestigungsende (204), ein zweites Befestigungsende (206) und einen Erfassungsbereich (202) beinhaltet, der sich zwischen dem ersten Befestigungsende (204) und dem zweiten Befestigungsende (206) erstreckt;
ein erstes Gehäuse (220), das eine Verbinderöffnung (226) definiert, wobei das erste Befestigungsende (204) im ersten Gehäuse (220) angeordnet ist; und
**dadurch gekennzeichnet, dass** die Dehnungssensoranordnung ferner Folgendes umfasst:
ein zweites Gehäuse (222), das um das zweite Befestigungsende (206) herum angeordnet ist.

2. Dehnungssensoranordnung (152, 352) nach Anspruch 1, wobei das erste Befestigungsende (204) eine Sensorschaltung (208) und einen elektrischen Sensorverbinder (210) beinhaltet.

3. Dehnungssensoranordnung (152, 352) nach Anspruch 2, wobei das erste Gehäuse (220) einen ersten Gehäuseabschnitt (220a) und einen zweiten Gehäuseabschnitt (220b) beinhaltet, der mit dem ersten Gehäuseabschnitt (220a) gekoppelt ist, wobei der erste Gehäuseabschnitt (220a) eine Aussparung (224) definiert, die dazu konfiguriert ist, das erste Befestigungsende (204) aufzunehmen.

4. Dehnungssensoranordnung (152, 352) nach Anspruch 3, ferner umfassend eine Leiterplatte (212), die im ersten Gehäuse (220) angeordnet und elektrisch mit dem elektrischen Sensorverbinder (214) verbunden ist, wobei die Leiterplatte (212) einen elektrischen Leiterplattenverbinder (214) beinhaltet, der mit der Verbinderöffnung (226) im ersten Gehäuse (220) ausgerichtet ist.

5. Dehnungssensoranordnung (152, 352) nach einem der vorhergehenden Ansprüche, ferner umfassend:
einen ersten Aufsatz (250), der dazu konfiguriert ist, mit einem aufblasbaren Schlauch (122) gekoppelt zu sein;
einen zweiten Aufsatz (252), der dazu konfiguriert ist, mit dem aufblasbaren Schlauch (122) gekoppelt zu sein;
eine erste lösbare Verbindung (240), die einen ersten Abschnitt (240a), der mit dem ersten Gehäuse (220) gekoppelt ist, und
einen zweiten Abschnitt (240b), der mit dem ersten Aufsatz (250) gekoppelt ist, beinhaltet; und
eine zweite lösbare Verbindung (242), die einen ersten Abschnitt (242a), der mit dem zweiten Gehäuse (222) gekoppelt ist, und
einen zweiten Abschnitt (242b), der mit dem zweiten Aufsatz (252) gekoppelt ist, beinhaltet.

6. Dehnungssensoranordnung (152, 352) nach Anspruch 5, wobei jede der ersten lösbaren Verbindung (240) und der zweiten lösbaren Verbindung (242) ein Schnappanbringungselement umfasst.

7. Evakuierungssystem (106), umfassend:
eine Evakuierungsrutsche (120), die einen aufblasbaren Schlauch (122) beinhaltet; und
eine Dehnungssensoranordnung (152, 352) nach Anspruch 1,
die am aufblasbaren Schlauch (122) befestigt ist, wobei das erste Gehäuse (220) mit einer ersten Stelle am aufblasbaren Schlauch (122) gekoppelt ist und wobei das zweite Gehäuse (222) mit einer zweiten Stelle am aufblasbaren Schlauch (122) gekoppelt ist.

8. Evakuierungssystem (106) nach Anspruch 7, wobei die Dehnungssensoranordnung (152, 352) ferner Folgendes umfasst:
einen ersten Aufsatz (250), der mit der ersten Stelle des aufblasbaren Schlauchs (122) verklebt ist;
eine erste lösbare Verbindung (240), die zwischen dem ersten Gehäuse (220) und dem ersten Aufsatz (250) gekoppelt ist;
einen zweiten Aufsatz (252), der mit der zweiten Stelle des aufblasbaren Schlauchs (122) verklebt ist; und
eine zweite lösbare Verbindung (242), die zwischen dem zweiten Gehäuse (222) und dem zweiten Aufsatz (252) gekoppelt ist, und
wobei vorzugsweise ein erster Abschnitt (240a) der ersten lösbaren Verbindung (240) mit dem ersten Gehäuse (220) gekoppelt ist und ein zweiter Abschnitt (240b) der ersten lösbaren Verbindung (240) mit dem ersten Aufsatz (250) gekoppelt ist, und
wobei ein erster Abschnitt (242a) der zweiten lösbaren Verbindung (242) mit dem zweiten Gehäuse (222) gekoppelt ist und ein zweiter Abschnitt (242b) der zweiten lösbaren Verbindung (242) mit dem zweiten Aufsatz (252) gekoppelt ist.

9. Evakuierungssystem (106) nach Anspruch 7 oder 8, ferner umfassend eine Abdeckung (260), die über der Dehnungssensoranordnung (152, 352) angeordnet und am aufblasbaren Schlauch (122) angebracht ist.

10. Evakuierungssystem (106) nach Anspruch 7-9, wobei das erste Befestigungsende (204) des Dehnungssensors eine Sensorschaltung und einen elektrischen Sensorverbinder beinhaltet, und wobei die Dehnungssensoranordnung (152, 352) ferner eine Leiterplatte (212) umfasst, die im ersten Gehäuse (220) angeordnet und über den elektrischen Sensorverbinder elektrisch mit der Sensorschaltung verbunden ist, wobei die Leiterplatte (212) einen elektrischen Leiterplattenverbinder (214) beinhaltet, der mit der Verbinderöffnung (226) im ersten Gehäuse (220) ausgerichtet ist, und vorzugsweise ferner Folgendes umfassend:
eine Druckfluidquelle (130), die mit dem aufblasbaren Schlauch (122) fluidgekoppelt ist;
eine Ventilanordnung (160), die mit der Druckfluidquelle (130) verbunden und dazu konfiguriert ist, einen Strom von Gas zum aufblasbaren Schlauch (122) zu steuern; und
eine Steuerung (170), die mit der Ventilanordnung (160) wirkgekoppelt und dazu konfiguriert ist, Steuersignale an die Ventilanordnung (160) zu senden, wobei die Steuersignale dazu konfiguriert sind, die Ventilanordnung (160) zu veranlassen,
sich zwischen einer geschlossenen Position und einer offenen Position zu verschieben, wobei die Steuerung (170) dazu konfiguriert ist, basierend auf Dehnungsdaten, die vom Dehnungssensor ausgegeben werden, zu bestimmen, ob die Ventilanordnung (160) zu öffnen oder die Ventilanordnung (160) zu schließen ist, und noch bevorzugter ferner umfassend eine Dehnungssensorverknüpfung, die elektrisch mit der Steuerung (170) und dem elektrischen Verbinder (214) der Leiterplatte (212) gekoppelt ist.

11. Evakuierungssystem (106) nach einem der Ansprüche 7-10, ferner umfassend:
einen ersten Klebstoff (354), der mit dem ersten Gehäuse (220) und dem aufblasbaren Schlauch (122) verklebt ist; und
einen zweiten Klebstoff (356), der mit dem zweiten Gehäuse (222) und dem aufblasbaren Schlauch (122) verklebt ist.

12. Verfahren zur Montage der Dehnungssensoranordnung (152, 352) nach Anspruch 1, umfassend:
Anordnen eines ersten Befestigungsendes (204) eines Dehnungssensors (200) in einem ersten Gehäuse (220);
Anordnen eines zweiten Befestigungsendes (206) des Dehnungssensors (200) in einem zweiten Gehäuse (222);
Koppeln des ersten Gehäuses (220) mit einem ersten Aufsatz (250); und
Koppeln des zweiten Gehäuses (222) mit einem zweiten Aufsatz (252) .

13. Verfahren nach Anspruch 12, wobei das Anordnen des ersten Befestigungsendes (204) des Dehnungssensors im ersten Gehäuse (220) Folgendes umfasst:
Anordnen des ersten Befestigungsendes (204) des Dehnungssensors in einer ersten Aussparung, die durch einen ersten Abschnitt des ersten Gehäuses (220) definiert ist;
Anordnen eines zweiten Abschnitts des ersten Gehäuses (220) über dem ersten Befestigungsende (204); und
Anordnen eines ersten Anbringungselements (230) durch den ersten Abschnitt des ersten Gehäuses (220), das erste Befestigungsende (204) und den zweiten Abschnitt des ersten Gehäuses (220), und vorzugsweise ferner umfassend:
elektrisches Verbinden einer Leiterplatte (212) mit einem elektrischen Sensorverbinder des ersten Befestigungsendes (204); und
Anordnen der Leiterplatte (212) in der ersten Aussparung, wobei ein elektrischer Verbinder der Leiterplatte (212) mit einer Verbinderöffnung, die durch den ersten Abschnitt des ersten Gehäuses (220) definiert wird, ausgerichtet ist.

14. Verfahren nach Anspruch 12 oder 13, wobei das Koppeln des ersten Gehäuses (220) mit dem ersten Aufsatz (250) Folgendes umfasst:
Koppeln eines ersten Abschnitts einer ersten lösbaren Verbindung (240) mit dem ersten Gehäuse (220);
Koppeln eines zweiten Abschnitts der ersten lösbaren Verbindung (240) mit dem ersten Aufsatz (250); und
Koppeln des ersten Abschnitts der ersten lösbaren Verbindung (240) mit dem zweiten Abschnitt der ersten lösbaren Verbindung (240), und
wobei das Koppeln des zweiten Gehäuses (222) mit dem zweiten Aufsatz (252) Folgendes umfasst:
Koppeln eines ersten Abschnitts einer zweiten lösbaren Verbindung (242) mit dem zweiten Gehäuse (222);
Koppeln eines zweiten Abschnitts der zweiten lösbaren Verbindung (242) mit dem zweiten Aufsatz (252); und
Koppeln des ersten Abschnitts der zweiten lösbaren Verbindung (242) mit dem zweiten Abschnitt der zweiten lösbaren Verbindung (242).

15. Verfahren nach Anspruch 14, ferner umfassend:
Koppeln des ersten Aufsatzes (250) mit einer ersten Stelle auf einem aufblasbaren Schlauch (122);
Koppeln des zweiten Aufsatzes (252) mit einer zweiten Stelle auf dem aufblasbaren Schlauch (122); und
Anordnen einer Abdeckung (260) über dem ersten Gehäuse (220) und dem zweiten Gehäuse (222).

## Revendications

1. Ensemble capteur d'étirement (152, 352), comprenant :
un capteur d'étirement (200) comportant une première extrémité de montage (204), une seconde extrémité de montage (206), et une région de détection (202) s'étendant entre la première extrémité de montage (204) et la seconde extrémité de montage (206) ;
un premier boîtier (220) définissant une ouverture de connecteur (226), la première extrémité de montage (204) étant située dans le premier boîtier (220) ; et
**caractérisé en ce que** l'ensemble capteur d'étirement comprend en outre
un second boîtier (222) situé autour de la seconde extrémité de montage (206).

2. Ensemble capteur d'étirement (152, 352) selon la revendication 1, dans lequel la première extrémité de montage (204) comporte un circuit de capteur (208) et un connecteur électrique de capteur (210).

3. Ensemble capteur d'étirement (152, 352) selon la revendication 2, dans lequel le premier boîtier (220) comporte une première partie de boîtier (220a) et une seconde partie de boîtier (220b) couplée à la première partie de boîtier (220a), la première partie de boîtier (220a) définissant un évidement (224) configuré pour recevoir la première extrémité de montage (204).

4. Ensemble capteur d'étirement (152, 352) selon la revendication 3, comprenant en outre une carte de circuit imprimé (212) située dans le premier boîtier (220) et connectée électriquement au connecteur électrique de capteur (214), la carte de circuit imprimé (212) comportant un connecteur électrique de carte de circuit imprimé (214) aligné avec l'ouverture de connecteur (226) dans le premier boîtier (220).

5. Ensemble capteur d'étirement (152, 352) selon une quelconque revendication précédente, comprenant en outre :
un premier patch (250) configuré pour être couplé à un tube gonflable (122) ;
un second patch (252) configuré pour être couplé au tube gonflable (122) ;
une première connexion libérable (240) comportant une première partie (240a) couplée au premier boîtier (220) et une seconde partie (240b) couplée au premier patch (250) ; et
une seconde connexion libérable (242) comportant une première partie (242a) couplée au second boîtier (222) et une seconde partie (242b) couplée au second patch (252).

6. Ensemble capteur d'étirement (152, 352) selon la revendication 5, dans lequel chacune de la première connexion libérable (240) et de la seconde connexion libérable (242) comprend un élément de fixation à encliquetage.

7. Système d'évacuation (106), comprenant :
un toboggan d'évacuation (120) comportant un tube gonflable (122) ; et
un ensemble capteur d'étirement (152, 352) tel que revendiqué dans la revendication 1, monté sur le tube gonflable (122), dans lequel le premier boîtier (220) est couplé à un premier emplacement sur le tube gonflable (122) et dans lequel le second boîtier (222) est couplé à un second emplacement sur le tube gonflable (122).

8. Système d'évacuation (106) selon la revendication 7, dans lequel l'ensemble capteur d'étirement (152, 352) comprend en outre :
un premier patch (250) collé au premier emplacement sur le tube gonflable (122) ;
une première connexion libérable (240) couplée entre le premier boîtier (220) et le premier patch (250) ;
un second patch (252) collé au second emplacement sur le tube gonflable (122) ; et
une seconde connexion libérable (242) couplée entre le second boîtier (222) et le second patch (252), et de préférence dans lequel une première partie (240a) de la première connexion libérable (240) est couplée au premier boîtier (220) et une seconde partie (240b) de la première connexion libérable (240) est couplée au premier patch (250), et dans lequel une première partie (242a) de la seconde connexion libérable (242) est couplée au second boîtier (222) et une seconde partie (242b) de la seconde connexion libérable (242) est couplée au second patch (252).

9. Système d'évacuation (106) selon la revendication 7 ou la revendication 8, comprenant en outre un couvercle (260) situé sur l'ensemble capteur d'étirement (152, 352) et fixé au tube gonflable (122).

10. Système d'évacuation (106) selon l'une quelconque des revendications 7 à 9, dans lequel la première extrémité de montage (204) du capteur d'étirement comporte un circuit de capteur et un connecteur électrique de capteur, et dans lequel 1 'ensemble capteur d'étirement (152, 352) comprend en outre une carte de circuit imprimé (212) située dans le premier boîtier (220) et connectée électriquement au circuit de capteur par l'intermédiaire du connecteur électrique de capteur, la carte de circuit imprimé (212) comportant un connecteur électrique de carte de circuit imprimé (214) aligné avec l'ouverture de connecteur (226) dans le premier boîtier (220), et comprenant en outre de préférence :
une source de fluide comprimé (130) couplée fluidiquement au tube gonflable (122) ;
un ensemble vanne (160) connecté à la source de fluide comprimé (130) et configuré pour commander un débit de gaz vers le tube gonflable (122) ; et
un dispositif de commande (170) couplé de manière fonctionnelle à l'ensemble vanne (160) et configuré pour envoyer des signaux de commande à l'ensemble vanne (160), les signaux de commande étant configurés pour amener l'ensemble vanne (160) à commuter entre une position fermée et une position ouverte, dans lequel le dispositif de commande (170) est configuré pour déterminer s'il faut ouvrir l'ensemble vanne (160) ou fermer l'ensemble vanne (160) sur la base de données d'étirement produites en sortie par le capteur d'étirement, et comprenant en outre plus préférablement une liaison de capteur d'étirement couplée électriquement au dispositif de commande (170) et au connecteur électrique (214) de la carte de circuit imprimé (212).

11. Système d'évacuation (106) selon l'une quelconque des revendications 7 à 10, comprenant en outre :
un premier adhésif (354) collé au premier boîtier (220) et au tube gonflable (122) ; et
un second adhésif (356) collé au second boîtier (222) et au tube gonflable (122).

12. Procédé d'assemblage de l'ensemble capteur d'étirement (152, 352) selon la revendication 1, comprenant :
le positionnement d'une première extrémité de montage (204) d'un capteur d'étirement (200) dans un premier boîtier (220) ;
le positionnement d'une seconde extrémité de montage (206) du capteur d'étirement (200) dans un second boîtier (222) ;
le couplage du premier boîtier (220) à un premier patch (250) ; et
le couplage du second boîtier (222) à un second patch (252).

13. Procédé selon la revendication 12, dans lequel le positionnement de la première extrémité de montage (204) du capteur d'étirement dans le premier boîtier (220) comprend :
le positionnement de la première extrémité de montage (204) du capteur d'étirement dans un premier évidement défini par une première partie du premier boîtier (220) ;
le positionnement d'une seconde partie du premier boîtier (220) au-dessus de la première extrémité de montage (204) ; et
le positionnement d'un premier élément de fixation (230) à travers la première partie du premier boîtier (220), la première extrémité de montage (204) et la seconde partie du premier boîtier (220), et comprenant en outre de préférence :
la connexion de manière électrique d'une carte de circuit imprimé (212) à un connecteur électrique de capteur de la première extrémité de montage (204) ; et
le positionnement de la carte de circuit imprimé (212) dans le premier évidement avec un connecteur électrique de carte de circuit imprimé (212) aligné avec une ouverture de connecteur définie par la première partie du premier boîtier (220).

14. Procédé selon la revendication 12 ou la revendication 13, dans lequel le couplage du premier boîtier (220) au premier patch (250) comprend :
le couplage d'une première partie d'une première connexion libérable (240) au premier boîtier (220) ;
le couplage d'une seconde partie de la première connexion libérable (240) au premier patch (250) ; et
le couplage de la première partie de la première connexion libérable (240) à la seconde partie de la première connexion libérable (240), et
dans lequel le couplage du second boîtier (222) au second patch (252) comprend :
le couplage d'une première partie d'une seconde connexion libérable (242) au second boîtier (222) ;
le couplage d'une seconde partie de la seconde connexion libérable (242) au second patch (252) ; et
le couplage de la première partie de la seconde connexion libérable (242) à la seconde partie de la seconde connexion libérable (242).

15. Procédé selon la revendication 14, comprenant en outre :
le couplage du premier patch (250) à un premier emplacement sur un tube gonflable (122) ;
le couplage du second patch (252) à un second emplacement sur le tube gonflable (122) ; et
le positionnement d'un couvercle (260) au-dessus du premier boîtier (220) et du second boîtier (222).
